# EUROPEAN PATENT SPECIFICATION

(11) **EP 2 293 083 B1**
(45) Date of publication and mention of the grant of the patent: **05.09.2018**
(21) Application number: 09766497.3
(22) Date of filing: 12.05.2009
(51) Int. Cl.: G01N 35/00, G01N 35/10

(54) **AUTOMATIC ANALYZER**
AUTOMATISCHES ANALYSEGERÄT
ANALYSEUR AUTOMATIQUE

(30) Priority: 17.06.2008 JP 2008158285
(43) Date of publication of application: 09.03.2011
(73) Proprietor: Hitachi High-Technologies Corporation, Minato-ku Tokyo 105-8717 (JP)
(72) Inventor: SHIBA Masaki, Hitachinaka-shi Ibaraki 312-8504 (JP); MIMURA Tomonori, Hitachinaka-shi Ibaraki 312-8504 (JP); HAMAZUMI Yuko, Tokyo 105-8717 (JP)
(74) Representative: Strehl Schübel-Hopf & Partner
(86) International application number: PCT/JP2009/058864
(87) International publication number: WO 2009/154049

(56) References cited:
- JP-A- 9 015 024
- JP-A- 63 109 373
- JP-A- 2000 046 624
- JP-A- 2001 004 641
- JP-A- 2003 294 774
- JP-A- 2005 083 777
- JP-A- 2005 164 509
- JP-A- 2007 285 888
- JP-A- 2007 285 888
- US-A- 6 148 666
- US-A1- 2008 019 878
- MARIA E DILORENZO ET AL: "Technological Advancements in Liquid Handling Robotics", SLAS TECHNOLOGY: TRANSLATING LIFE SCIENCES INNOVATION, vol. 6, no. 2, 1 April 2001 (2001-04-01), pages 36-40, XP055391789, DOI: https://doi.org/10.1016/S1535-5535-04-0012 3-6

## Description

### Technical Field

The present invention relates to an automatic analyzer that performs qualitative/quantitative analysis of blood, urine, and other biological samples.

### Background Art

A reagent dispensing mechanism for an automatic analyzer uses either a reagent dispensing method or a reagent pipetting method. When the reagent pipetting method is used, a reagent probe moves down into a reagent bottle to detect the liquid level of a reagent. After the liquid level of the reagent is detected, a specific amount of reagent, which is predetermined for each reagent, is measured out with a nozzle, and then a predetermined amount of reagent is dispensed into a reaction cuvette.

When the reagent pipetting method is used, it is important that the following conditions be satisfied to measure out a specific amount of reagent with high accuracy:
(1) The leading end of the nozzle stops at a predetermined distance from the liquid surface of a reagent in a reagent vessel.
(2) When the reagent is to be measured out, the liquid surface in the reagent vessel does not significantly undulate.

Meanwhile, the constituents of the reagent in the reagent vessel greatly vary with the items to be examined. When the reagent contains a large amount of surfactant, a cylindrical tube is inserted into the reagent vessel to prevent the reagent from bubbling due to reagent liquid surface undulation (refer to Patent Document 1).

### Prior Art Reference

### Patent Document

Patent Document 1: JP-2005-83777-A

An automatic analyzer detecting contact of the suction nozzle with the liquid surface using a combination of signals from capacitance-type and pressure-detection-type liquid surface sensors is disclosed in JP 2007 285888 A.

### Summary of the Invention

### Problems to be Solved by the Invention

As for the items to be examined that cause data drift due to pH changes that occur when, for instance, Ca (calcium) or ALP (alkaline phosphatase) absorbs CO₂ (carbon dioxide) in air, a cover is formed to hermetically close the reagent bottle, and opened and closed or pierced as needed. Further, calibration is frequently effected in order to reduce the influence of data drift.

Meanwhile, various schemes are employed to provide an improved apparatus operation in addition to improve the shape of the reagent bottle. For example, one scheme is to calculate beforehand the remaining amount of reagent for the purpose of preventing the amount of suctioned reagent from being unduly decreased by reagent liquid surface undulation, and increase the distance of descent of a reagent suction probe by a predetermined amount in accordance with the number of reagent dispensing operations. This ensures that the reagent is suctioned with the reagent probe properly lowered to the height of the reagent even when the reagent liquid surface is undulating. Another scheme is to wait until the reagent liquid level is stabilized with its undulation terminated, and then start suctioning the reagent.

Although a hermetically closable reagent vessel is used as described above, its cost is high. Further, if a hermetically closable reagent vessel is also used for examining the items exclusive of ALP and Ca, which could not possibly cause data drift, over engineering occurs. Furthermore, when the hermetically closable reagent vessel (bottle) is used, it is difficult to perform processing at a high speed because the reagent probe pierces the reagent vessel's cover.

Moreover, there are the following problems with an automatic analyzer that is capable of operating at such a high speed as to perform multiple-sample processing.

In an automatic analyzer that is capable of performing multiple-sample processing with a high speed operation, a tube is inserted into the reagent bottle because the reagent bottle significantly undulates to increase the amount of reagent surface bubbles. However, this increases the cost of the reagent vessel. Further, an automatic analyzer for performing multiple-sample processing requires a large-capacity reagent bottle. However, the use of a large-capacity reagent bottle increases the amount of bubbles generated. Furthermore, when a hermetically closable reagent bottle is used, performing high-speed processing is difficult because the reagent probe pierces the reagent bottle.

An object of the present invention is to provide an automatic analyzer and automatic analysis method that make it possible to measure out a reagent in a manner appropriate for an employed reagent vessel, obtain highly reliable analytical data, and offer high processing capabilities when the employed reagent vessel is suitable for chemical characteristics of the reagent.

### Means for Solving the Problems

The present invention is configured as described below in order to achieve the above-mentioned object.

According to one aspect of the present invention, there is provided an automatic analyzer having reagent suction/discharge means for inserting a nozzle into the opening of a reagent vessel, suctioning a reagent from the reagent vessel, and discharging the suctioned reagent into a reaction cuvette, the automatic analyzer including: reagent vessel information input means in which the size of the opening of the reagent vessel is input; a plurality of different types of liquid surface contact detection means for detecting that the nozzle has reached the liquid surface of the reagent in the reagent vessel; and operation control means for selecting one of the different liquid surface contact detection means in accordance with the size of the opening of the reagent vessel as input from the reagent vessel information input means and controlling a reagent suctioning operation of the reagent suction/discharge means in accordance with a liquid surface contact detection signal from the selected liquid surface contact detection means.

According to another aspect of the present invention, there is provided an automatic analysis method for inserting a nozzle into the opening of a reagent vessel, suctioning a reagent from the reagent vessel, discharging the suctioned reagent into a reaction cuvette containing a sample, and analyzing the resulting mixed solution in the reaction cuvette, the automatic analysis method including the steps of: inputting the size of the opening of the reagent vessel; selecting one of a plurality of different types of liquid surface contact detection means which detects that the nozzle has reached the liquid surface of the reagent in the reagent vessel, in accordance with the size of the opening of the reagent vessel as input from reagent vessel information input means; and controlling a reagent suctioning operation of the nozzle in accordance with a liquid surface contact detection signal from the selected liquid surface contact detection means.

### Effect of the Invention

When an employed reagent vessel is suitable for chemical characteristics of a reagent, the present invention provides an automatic analyzer and automatic analysis method that make it possible to measure out the reagent in a manner appropriate for the reagent vessel, obtain highly reliable analytical data, and offer high processing capabilities.

### Brief Description of the Drawings

Fig. 1 is a system block diagram illustrating the overall configuration of an automatic analysis system to which the present invention is applied.
Fig. 2 is a schematic diagram illustrating the configuration of a biochemical analysis module in the automatic analysis system to which the present invention is applied.
Fig. 3 is a diagram illustrating analysis steps according to an embodiment of the present invention.
Fig. 4 is a diagram illustrating a reagent dispensing control cycle according to an embodiment of the present invention.
Fig. 5 is a diagram illustrating examples of different reagent bottles used with an automatic analyzer according to an embodiment of the present invention.
Fig. 6 is a diagram illustrating reagent liquid level detection methods used in the automatic analyzer according to an embodiment of the present invention.
Fig. 7 is a diagram illustrating an example of an analysis parameter setup screen 500 of the automatic analyzer according to an embodiment of the present invention.
Fig. 8 is a flowchart illustrating the flow of reagent dispensing operation determination by the automatic analyzer according to an embodiment of the present invention.
Fig. 9 is a functional block diagram illustrating how the flow shown in FIG. 8 is executed.
Fig. 10 is a flowchart illustrating the flow of reagent dispensing operation determination by the automatic analyzer according to an embodiment of the present invention.
Fig. 11 is a functional block diagram illustrating how the flow shown in FIG. 10 is executed.
Fig. 12 is a diagram illustrating the overall configuration of an automatic analyzer to which the present invention is applied.

### Mode for Carrying Out the Invention

Embodiments of the present invention will now be described with reference to the accompanying drawings.

### First Embodiment

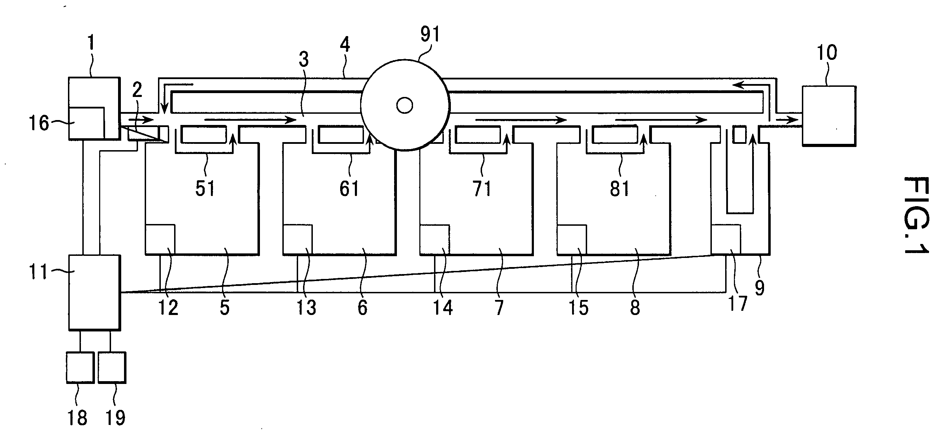

Fig. 1 is a system block diagram illustrating the overall configuration of an automatic analysis system to which the present invention is applied.

Referring to Fig. 1, the automatic analysis system includes a sample rack introduction unit 1, an ID reading unit 2, a transport line 3 that operates as a rack transport device, a reexamination transport line 4, analysis modules 5 to 8, a sample rack standby unit 9, a sample rack recovery unit 10, and an overall management computer 11.

The sample rack introduction unit 1 introduces a plurality of sample racks, which each retain a plurality of samples. The analysis modules 5 to 8 are disposed along the rack transport line 3 and removably connected to the transport line 3. Any number of analysis modules may be used. In the example shown in Fig. 1, however, four analysis modules are used.

In the example shown in Fig. 1, the analysis modules are biochemical analysis modules. However, the biochemical analysis modules may be in conjunction with other analysis modules such as immunological analysis modules and genetic analysis modules.

The transport line 3 receives the sample racks from the sample rack introduction unit 1 and transports them to a predetermined analysis module selected from modules 5 to 8. The transport line 3 also transports the sample racks retaining samples analyzed by the analysis modules 5 to 8 in such a manner as to place them in the sample rack recovery unit 10. The analysis modules 5 to 8 each have corresponding draw line 51, 61, 71, or 81.

The sample racks are transported from the transport line 3 to the analysis modules 5-8 by allowing the sample racks to be drawn into the draw lines 51, 61, 71, 81.

The reexamination transport line 4 returns the sample racks, which have been subjected to analysis by one of the analysis modules 5 to 8, to the inlet of the transport line 3 when they need to be tested again or further analyzed by another analysis module.

A buffer 91 installed in the transport line 3 which transports racks on which samples including a calibration sample are mounted, or in the reexamination transport line 4 stores for an arbitrary period of time the racks on which arbitrary samples transported by the transport line 3 or reexamination transport line 4 are mounted. It is possible to supply the racks again to the analysis modules 5 to 8 or to the sample rack recovery unit 10 at an arbitrary timing, further mount a calibration sample, a standard solution, and other samples to be analyzed at a specific point of time, and supply them to the analysis modules 5 to 8.

The sample rack standby unit 9 is used as a place where a sample that is analyzed by any one of analysis modules 5 to 8 and going to be further analyzed by another analysis module is temporarily retained until a judgment result is obtained to determine whether the sample should be reexamined after being dispensed and analyzed in any one of analysis modules 5 to 8.

The analysis modules 5 to 8 each include corresponding analysis module computer 12, 13, 14, or 15, for the purpose of controlling necessary processing operations in them. The sample rack introduction unit 1 includes a computer 16 that executes necessary control in the sample rack introduction unit 1, transport line 3, reexamination transport line 4, buffer 91, and sample rack recovery unit 10.

Further, the sample rack standby unit 9 includes a computer 17 that executes necessary control in the sample racks. The analysis module computers 12 to 17 and the ID reading unit 2 are connected to the overall management computer 11. Further, the computer 11 is also connected to an operating unit 18 and a display unit 19. The operating unit 18 includes an input/output device that inputs necessary information. The display unit 19 displays analysis results.

A sample retained by a sample rack has a sample ID which represents the information (a reception number, a patient name, the requested items to be examined, etc.) about the sample. Each sample rack has a rack ID which represents rack identification information such as a rack number. Sample racks placed in the sample rack introduction unit 1 are transported by the transport line 3. When a sample rack is transferred to the transport line 3, the ID reading unit 2 reads the associated information, namely, a sample ID and sample rack ID, and transmits the read information to the computer 11. In accordance with the information, the computer 11 determines an analysis module with which the requested items to be examined are analyzed, and supplies relevant information to the computer 16 and any one of the computers 12 to 15 for the determined analysis module.

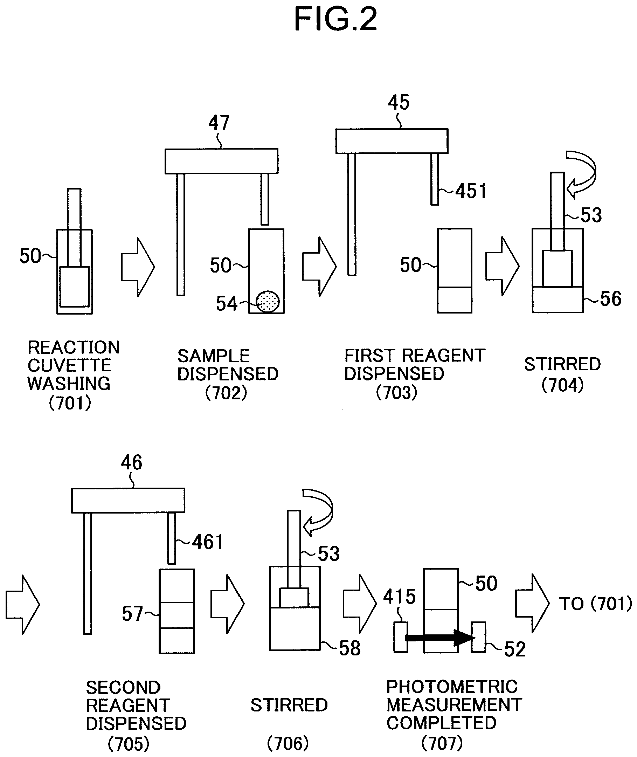

Fig. 2 is a schematic diagram illustrating the configuration of a biochemical module in the automatic analysis system to which the present invention is applied.

Referring to Fig. 2, the biochemical analysis module 7 has a reagent system that includes a first reagent disk 43, a second reagent disk 44, a first reagent dispensing pipetter 45, and a second reagent dispensing pipetter 46. A plurality of reagent vessels 41 that contain a first reagent are circularly disposed in the first reagent disk 43. A plurality of reagent vessels 42 that contain a second reagent are circularly disposed in the second reagent disk 44.

The biochemical analysis module 7 also has a sample system, a reaction system, and a measurement (analysis) system. The sample system includes a sample dispensing pipetter 47. The reaction system includes a plurality of reaction cuvettes 50. The reaction cuvettes 50 are disposed on a reaction disk 49 through which constant temperature water from an incubation bath 48 circulates. The measurement (analysis) system includes a multi-wavelength photometer 52.

A sample rack 30 is drawn into a draw line 71. A sample retained by the sample rack and placed in sample suction position is suctioned by the sample dispensing pipetter 47. When placed at a sample dispensing position, the sample is discharged into a reaction cuvette 50 of the reaction disk 49. After the sample is discharged into the reaction cuvette 50, the reaction disk 49 rotates to move the reaction cuvette 50 to a first reagent dispensing position. The first reagent which is retained by the first reagent disk 43 is retained in a reagent bottle 41. The first reagent pipetter 45 dispenses the first reagent into the reaction cuvette 50.

A liquid level detection function is incorporated to accurately detect the liquid level of a reagent and prevent the first reagent dispensing pipetter 45 from being excessively immersed into the reagent at the time of reagent dispensing. This ensures that the reagent pipetter 45 is not unduly soiled.

After the first reagent is dispensed into the reaction cuvette 50, the reaction cuvette 50 is transferred to a stirring position at which a stirring device 53 stirs the sample and the first reagent.

When the second reagent needs to be added, the reaction cuvette 50 is transferred to a second reagent dispensing position after the above stirring operation. The second reagent which is placed in a reagent bottle 42 retained by the second reagent disk 44 is then dispensed into the reaction cuvette 50 by the second reagent pipetter 46. After completion of dispensing, the reaction cuvette 50 is transferred to a stirring position at which the stirring device 53 stirs the sample, the first reagent, and the second reagent in the reaction cuvette 50. A reaction solution is then generated as a result of stirring.

The reaction cuvette 50 containing the reaction solution is transferred to a measurement position. At the measurement position, the multi-wavelength photometer 52 measures the multi-wavelength absorbance of the reaction solution. Consequently, the result of biochemical analysis is obtained.

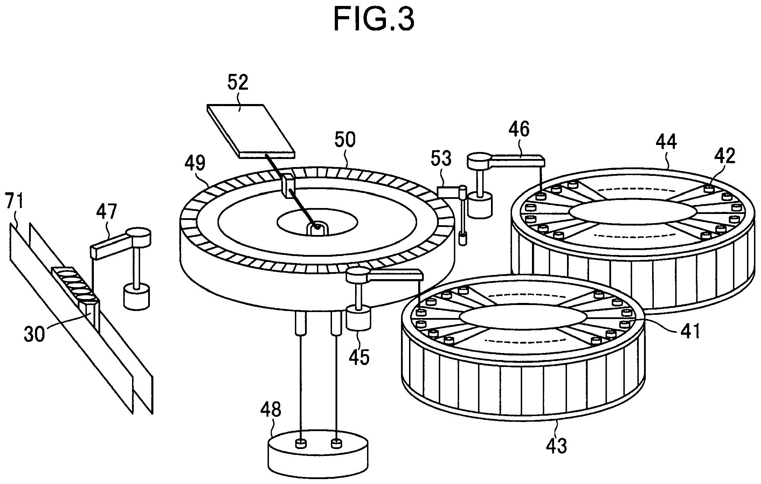

Fig. 3 is a diagram illustrating analysis steps according to an embodiment of the present invention. As shown in Fig. 3, first of all, the reaction cuvette 50 is washed by a reaction cuvette washing mechanism (step 701). Next, the sample dispensing pipetter 47 measures out a sample 54, and then the sample 54 is dispensed into the reaction cuvette 50 (step 702). Next, a nozzle 451 of the first reagent dispensing pipetter 45 measures out a first reagent from a reagent vessel and dispenses the first reagent into the reaction cuvette 50 (step 703).

Next, the stirring mechanism stirs the sample 54 and the first reagent in the reaction cuvette 50 to obtain a reaction solution 56 (step 704). Next, a nozzle 461 of the second reagent dispensing pipetter 46 dispenses a second reagent 57 into the reaction cuvette 50 (step 705). Subsequently, the mixture in the reaction cuvette 50 is stirred by the stirring mechanism 53 to obtain a reaction solution 58 (step 706).

Next, light emitted from a light source 415 passes through the reaction solution 58 and is received by the photometer 52, and then the absorbance of the reaction solution 58 is measured to obtain an analysis result (step 707) .

Upon completion of analysis, the reaction cuvette 50 is washed again (step 701) and placed on standby for the next measurement. The above-described sequence is repeated as needed.

In the example shown in Fig. 3, two different reagents are dispensed into a single cell, or more specifically, the first and second reagents are dispensed into the reaction cuvette 50, and the absorbance of the reaction solution 58 is eventually measured to calculate an analysis result. In reality, however, one or more reagents may be dispensed into the reaction cuvette 50. Further, in the automatic analyzer according to an embodiment of the present invention, a plurality of reaction cuvettes are circumferentially disposed to pass around the photometer a number of times. Therefore, the absorbance can be photometrically measured a number of times.

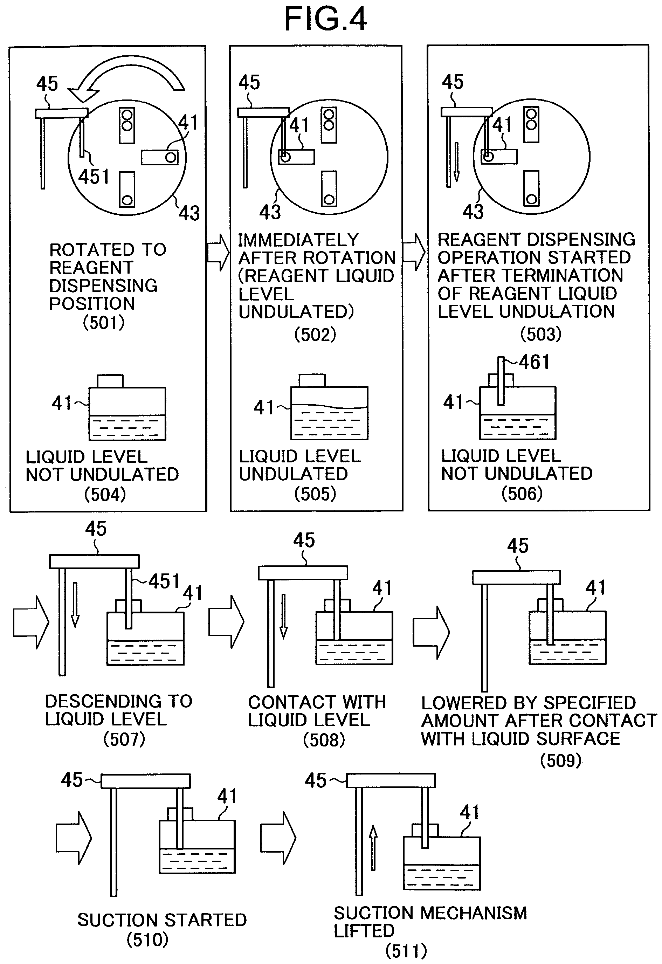

Fig. 4 is a diagram illustrating a reagent dispensing control cycle according to an embodiment of the present invention. Referring to Fig. 4, the reagent dispensing pipetter 46, the reagent disk 44, and the reagent bottle 42 perform the same operations as the reagent dispensing pipetter 45, the reagent disk 443, and the reagent bottle 41.

When a reagent is to be dispensed, the reagent dispensing pipetter 45 moves to a reagent dispensing position, and the reagent disk 43 rotates to place the reagent bottle 41 in the reagent dispensing position (state 501). Meanwhile, the liquid level in the reagent bottle 41 remains stationary before reagent disk rotation (state 504). Immediately after the rotation of the reagent disk 43 (state 502), however, the liquid level in the reagent bottle 41 is unstable due to inertial force prevailing during reagent disk rotation. Therefore, the reagent dispensing pipetter 45 cannot start dispensing the reagent before the reagent liquid level stabilizes (state 505).

After the reagent liquid level is stabilized (state 506), the reagent dispensing pipetter 45 descends to the liquid level and dispenses the reagent (state 503). The nozzle 451 of the reagent dispensing pipetter 45 descends within the reagent bottle 41 to reach for the liquid surface (state 507). After coming into contact with the reagent liquid surface (state 508), the nozzle 451 of the reagent dispensing pipetter 45 continues to descend from the liquid surface by a predetermined amount (state 509).

In the above operation, the distance of descent from the liquid surface may be a fixed distance from the liquid surface or a distance proportional to the amount of suction because the liquid level lowers by an amount proportional to the amount of suction when the reagent is suctioned. Next, the nozzle 451 of the reagent dispensing pipetter 45 suctions a preselected amount of reagent (state 510). Subsequently, the reagent dispensing pipetter 45 ascends (state 511), leaves the liquid level, moves to the reaction cuvette 50 which is not shown in the figure, and discharges the reagent into the reaction cuvette 50. This reagent dispensing control cycle is repeated as needed to dispense a reagent into each reagent bottle 41.

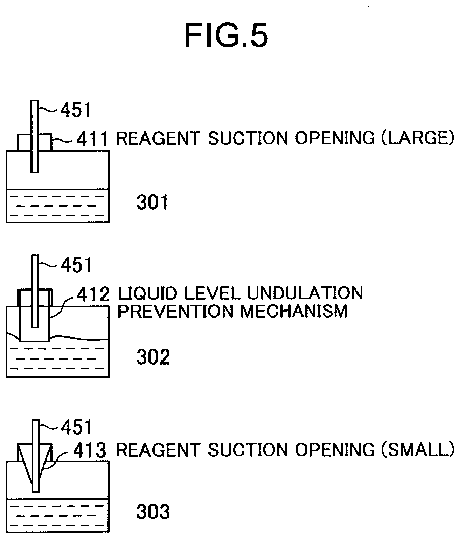

Fig. 5 is a diagram illustrating examples of different reagent bottles used with the automatic analyzer according to an embodiment of the present invention. A reagent bottle 301 shown in Fig. 5 has a large reagent suction opening 411. Therefore, even if the stop position of the reagent dispensing pipetter 45 is slightly shifted when the nozzle 451 of the reagent dispensing pipetter 45 suctions a reagent, the suctioning operation can be accomplished with ease. Further, the employed bottle shape is simple so that the manufacturing cost of the reagent bottle 301 can be reduced. However, it takes a certain amount of time for an undulating liquid level in the reagent vessel to become stabilized.

Another reagent bottle 302 differs from the reagent bottle 301 in that the former incorporates a cylindrical structure 412. The cylindrical structure 412 is used to shorten the time required for a reagent dispensing operation by terminating the undulation of the liquid surface in a minimum of time after reagent disk rotation. The reagent bottle 302 ensures that the undulation of the reagent liquid surface is minimized within the cylindrical structure 412 even during reagent disk rotation. Thus, the reagent bottle 302 stabilizes the reagent liquid level within a shorter period of time than the reagent bottle 301. This feature makes it possible to start a reagent dispensing operation immediately after reagent disk rotation.

Still another reagent bottle 303 is designed for use with a reagent that deteriorates shortly, and is provided with a small reagent suction opening 413. When, for instance, ALP (alkaline phosphatase) is used as a reagent, it absorbs carbon dioxide in air to change its pH (hydrogen-ion exponent) and responsiveness. Therefore, the reagent suction opening for reagent dispensing is minimized to inhibit deterioration.

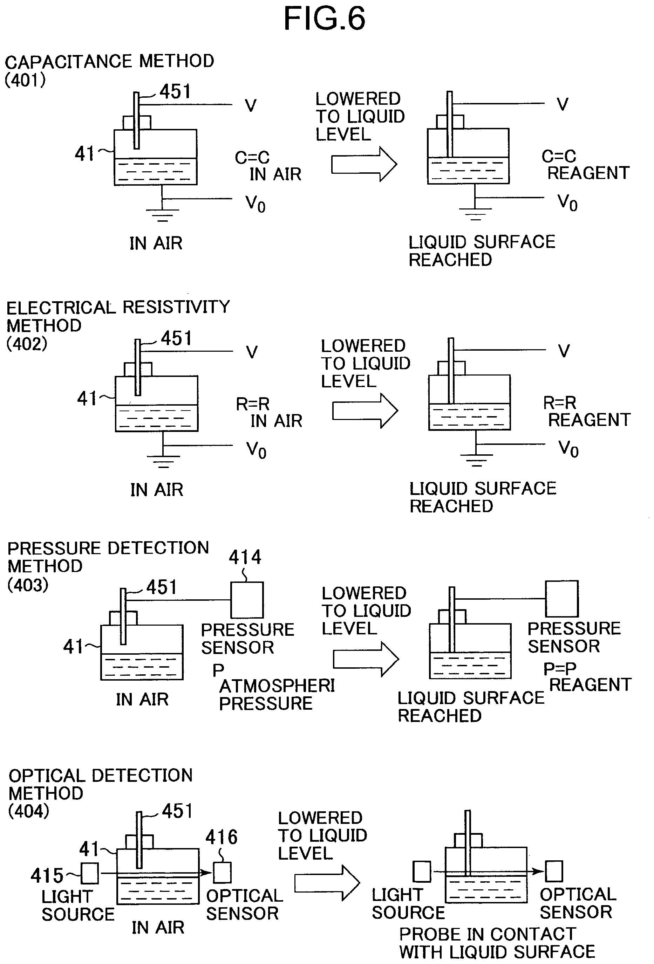

Fig. 6 is a diagram illustrating reagent liquid level detection methods used in the automatic analyzer according to an embodiment of the present invention. An optimum reagent liquid level detection method is selected in accordance with the shapes of a reagent bottle shown in Fig. 5.

Referring to Fig. 6, a capacitance method 401 grounds the reagent bottle 41 while a potential difference of V exists between the cases, in one of which the nozzle (probe) of the reagent dispensing pipetter 451 is in air and another one of which the nozzle is in contact with the reagent liquid surface, and measures the difference for the purpose of judging whether the reagent liquid surface is reached.

An electrical resistivity method 402 is a liquid level detection method that is different from the capacitance method 401. While the capacitance method 401 forms a judgment in accordance with the difference in capacitance between the cases, in one of which the nozzle of the reagent dispensing pipetter is in air and another one of which the nozzle is in contact with the liquid surface, the electrical resistivity method 402 forms a judgment in accordance with the difference in electrical resistivity.

The capacitance method 401 and the electrical resistivity method 402 both exhibit high accuracy in liquid level detection. However, these methods may erroneously detect the liquid level when, for instance, the nozzle of the reagent dispensing pipetter comes into contact with the reagent bottle 41 before reaching the liquid surface. It is therefore preferred that the reagent bottle 41 have a large reagent suction opening.

A pressure detection method 403 detects the liquid level by determining the difference in pressure between the cases, in one of which the nozzle (probe) is in air and another one of which the nozzle is in contact with the liquid surface. While the nozzle of the reagent dispensing pipetter is in air, the pressure is equal to atmospheric pressure. However, when the nozzle reaches the liquid surface, the pressure differs from atmospheric pressure due, for instance, to the difference in viscosity between liquid and gas. Therefore, the pressure detection method 403 detects such a pressure difference.

An optical detection method 404 is used in conjunction with an optical system that includes a light source 415 and an optical sensor 416, which are positioned on either side of the reagent bottle 41. The optical sensor 416 is used to detect the reagent liquid level. The optical detection method 404 allows the optical sensor 416 to detect whether the leading end of the nozzle of the reagent dispensing pipetter has passed the optical sensor 416 for the purpose of checking whether the reagent dispensing pipetter has reached the liquid surface.

The pressure detection method 403 and the optical detection method 404 exhibit lower liquid level detection accuracy than the capacitance method and the electrical resistivity method. However, the pressure detection method 403 and the optical detection method 404 are unlikely to erroneously detect the reagent liquid level even when the nozzle of the reagent dispensing pipetter comes into contact with a suction port of the reagent vessel. Therefore, the pressure detection method 403 and the optical detection method 404 can be applied to a reagent bottle having a small reagent suction opening.

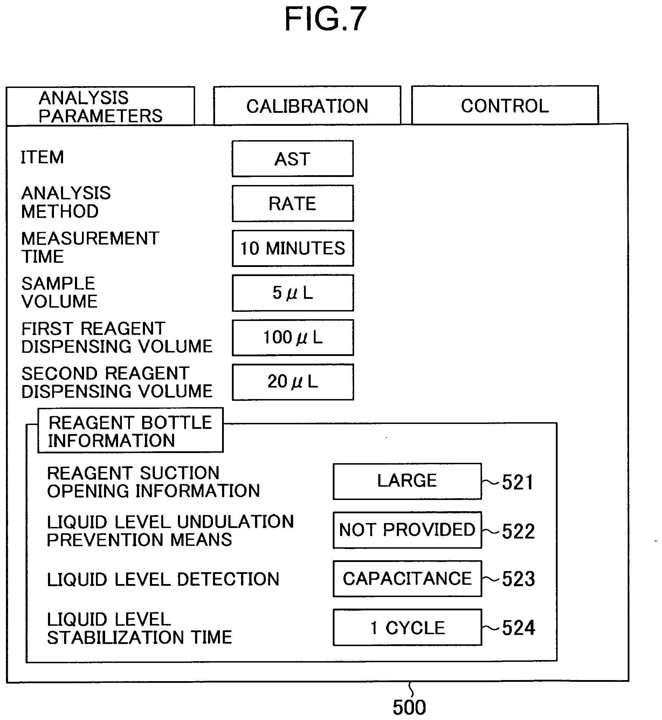

Fig. 7 is a diagram illustrating an example of an analysis parameter setup screen 500 of the automatic analyzer according to an embodiment of the present invention. When particular substances contained in a sample are to be measured, analysis parameters concern individual items of the substances to be examined and represent the amount of sample to be dispensed and the amount of reagent to be dispensed. These pieces of information are set up, stored beforehand in the automatic analyzer, and registered and used as the analysis parameters.

In particular, the information about the shape of a reagent bottle, which is shown in Fig. 7, may be registered in a barcode, RFID tag, or other noncontact information medium attached to the reagent bottle. After the reagent bottle is mounted on the automatic analyzer, such registered information written on the reagent bottle may be read by and stored in the automatic analyzer.

In an embodiment of the present information, the information about a reagent bottle is to be set up for the individual items to be examined in addition to the amount of sample to be dispensed, the amount of reagent to be dispensed, and so on. Referring to Fig. 7, in an embodiment of the present invention, an operator is prompted to set up, from a keyboard or other information input unit, various items of information about a reagent bottle, namely, the information 521 about a reagent suction opening, the information 522 about the provision of liquid surface undulation prevention means, the information 523 about a liquid level detection method, and the information 524 about liquid level stabilization time which is required to be taken for liquid level stabilization after reagent disk rotation to move a bottle to the reagent dispensing position has stopped.

In an embodiment shown in Fig. 7, the operator manipulates a keyboard or other information input unit to set up the various items of information about a reagent bottle, namely, the information 521 about a reagent suction opening, the information 522 about the provision of liquid level undulation prevention means, the information 523 about a liquid level detection method, and the information 524 about liquid level stabilization time which is required to be taken for liquid level stabilization after reagent disk rotation to move a bottle to the reagent dispensing position has stopped. Alternatively, however, the above-mentioned items of information may be prerecorded in a barcode, RFID tag, or other noncontact information medium attached to a reagent bottle mounted on and stored in the automatic analyzer.

It is preferred that the liquid level stabilization time for a reagent in the reagent bottle be taken N times the reagent dispensing control cycle. In an embodiment of the present invention, the reagent is not dispensed immediately after reagent disk rotation stop. Instead, a reagent dispensing operation starts after only the reagent dispensing operation is halted for one cycle in consideration of a reagent dispensing control cycle. During such a halt, the whole automatic analyzer is not stopped so that operations such as reaction cuvette washing and reaction solution absorbance measurement may be performed.

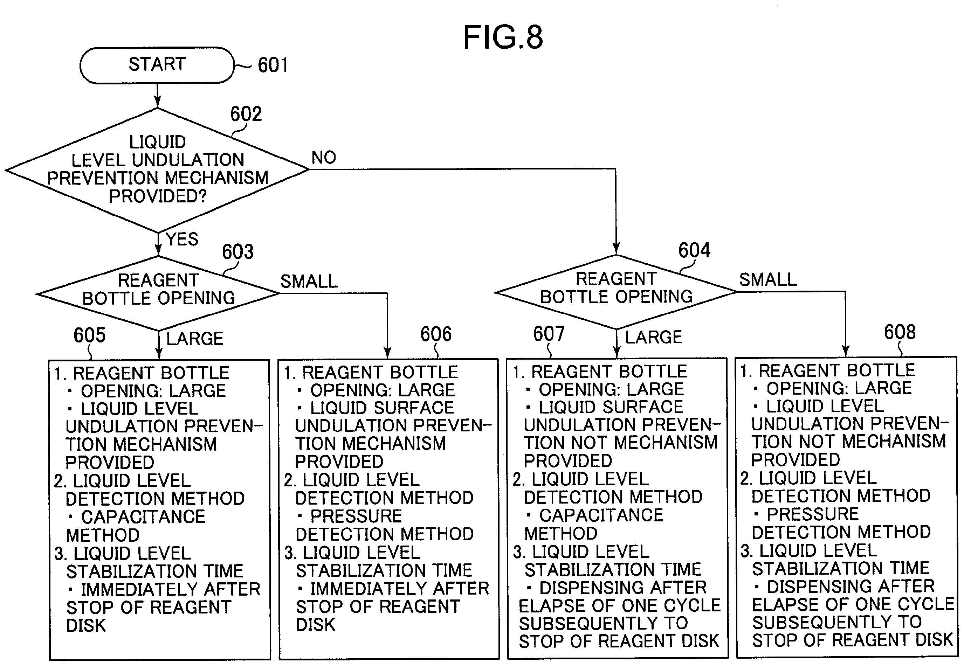

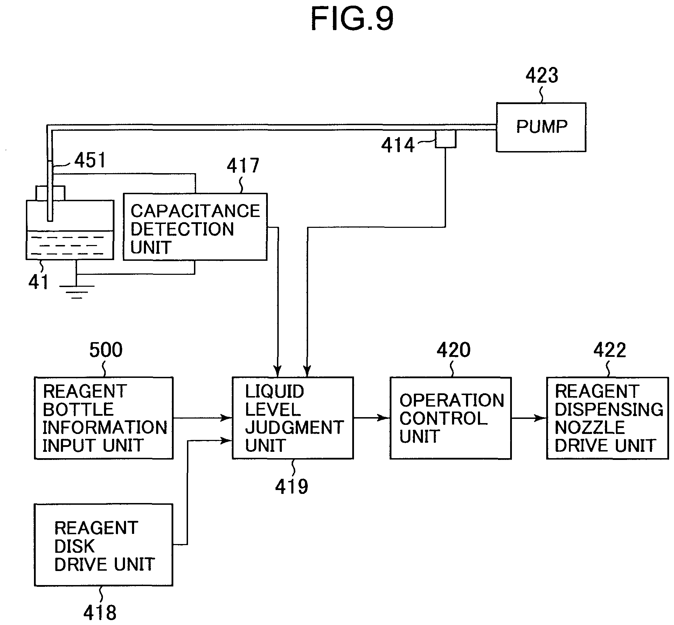

Fig. 8 is a flowchart illustrating the flow of reagent dispensing operation determination by the automatic analyzer according to an embodiment of the present invention. Fig. 9 is a functional block diagram illustrating how the flow shown in Fig. 8 is executed.

In the automatic analyzer according to an embodiment of the present invention, determination as for an actual reagent dispensing operation is made after the operator selects a reagent dispensing operation and a liquid level detection method from the setup screen 500 in accordance with the shape of a reagent bottle. Alternatively, however, the automatic analyzer may determine an actual reagent dispensing operation in accordance with information stored in a barcode, RFID tag, or other noncontact information medium attached to each reagent bottle.

An operation starts in step 601. Before the start of a reagent dispensing operation, a liquid level judgment unit (computer) 419 notes the information about the shape of a reagent bottle, which is set up by a reagent bottle information input unit 500, and first judges whether the reagent bottle has a liquid level undulation prevention mechanism (step 602). When the judgment result obtained in step 602 indicates that the reagent bottle has no liquid leakage prevention mechanism, the liquid level judgment unit 419 proceeds to step 604 and judges whether the opening of the reagent bottle is large.

When the judgment result obtained in step 604 indicates that the reagent bottle has a large opening, the liquid level judgment unit 419 proceeds to step 607 and judges whether one cycle has elapsed after the reagent disk rotation is stopped by a reagent disk drive unit 418. When one cycle has elapsed after the stop of the reagent disk rotation, the liquid level judgment unit 419 notifies an operation control unit 9 that one cycle has elapsed after the stop of the reagent disk rotation. In accordance with a signal transmitted from the liquid level judgment unit 419, the operation control unit controls a reagent dispensing nozzle drive unit 422 to insert and lower the nozzle 451 into the reagent bottle 41. In accordance with a capacitance value detected by a capacitance detection unit 417, the liquid level judgment unit 419 judges whether the nozzle 451 has reached the liquid surface. If the nozzle 451 is judged to have reached the liquid surface, the liquid level judgment unit 419 notifies the operation control unit 420 that the nozzle 451 has reached the liquid surface.

When, on the other hand, the judgment result obtained in step 604 indicates that the reagent bottle has a small opening, the liquid level judgment unit 419 proceeds to step 608 and judges whether one cycle has elapsed after the reagent disk rotation is stopped by the reagent disk drive unit 418. When one cycle has elapsed after the stop of the reagent disk rotation, the liquid level judgment unit 419 notifies the operation control unit 9 that one cycle has elapsed after the stop of the reagent disk rotation. In accordance with a signal transmitted from the liquid level judgment unit 419, the operation control unit controls the reagent dispensing nozzle drive unit 422 to insert and lower the nozzle 451 into the reagent bottle 41. In accordance with a pressure value detected by a pressure sensor 414, the liquid level judgment unit 419 judges whether the nozzle 451 has reached the liquid surface. If the nozzle 451 is judged to have reached the liquid surface, the liquid level judgment unit 419 notifies the operation control unit 420 that the nozzle 451 has reached the liquid surface.

When, on the other hand, the judgment result obtained in step 602 indicates that the reagent bottle has a liquid leakage prevention mechanism, the liquid level judgment unit 419 proceeds to step 603 and judges whether the opening of the reagent bottle is large. When the reagent bottle has an opening similar to the opening of the reagent bottle 303 which is shown in Fig. 5, the opening is judged to be small. When, on the other hand, the reagent bottle has an opening similar to the opening of the reagent bottle 301 or 302 which are shown in Fig. 5, the opening is judged to be large.

When the judgment result obtained in step 603 indicates that the reagent bottle has a large opening, the liquid level judgment unit 419 proceeds to step 605 and judges whether the reagent disk drive unit 418 has just stopped the reagent disk rotation. Immediately after the stop of the reagent disk rotation, the liquid level judgment unit 419 notifies the operation control unit 9 that the reagent disk drive unit 418 has just stopped the reagent disk rotation. In accordance with a signal transmitted from the liquid level judgment unit 419, the operation control unit controls the reagent dispensing nozzle drive unit 422 to insert and lower the nozzle 451 into the reagent bottle 41. In accordance with a capacitance value detected by the capacitance detection unit 417, the liquid level judgment unit 419 judges whether the nozzle 451 has reached the liquid surface. If the nozzle 451 is judged to have reached the liquid surface, the liquid level judgment unit 419 notifies the operation control unit 420 that the nozzle 451 has reached the liquid surface.

When, on the other hand, the judgment result obtained in step 603 indicates that the reagent bottle has a small opening, the liquid level judgment unit 419 proceeds to step 606 and judges whether the reagent disk drive unit 418 has just stopped the reagent disk rotation. Immediately after the stop of the reagent disk rotation, the liquid level judgment unit 419 notifies the operation control unit 9 that the reagent disk drive unit 418 has just stopped the reagent disk rotation. In accordance with a signal transmitted from the liquid level judgment unit 419, the operation control unit controls the reagent dispensing nozzle drive unit 422 to insert and lower the nozzle 451 into the reagent bottle 41. In accordance with a pressure value detected by the pressure sensor 414, the liquid level judgment unit 419 judges whether the nozzle 451 has reached the liquid surface. If the nozzle 451 is judged to have reached the liquid surface, the liquid level judgment unit 419 notifies the operation control unit 420 that the nozzle 451 has reached the liquid surface.

The pressure sensor 414 which is installed near a pump 423 that controls a reagent suction/discharge operation of the nozzle, detects pressure within the nozzle.

In the above-described example, the automatic analyzer chooses between the capacitance method and the pressure detection method in accordance with the provision of a liquid level undulation prevention mechanism and the size of the reagent bottle opening. However, if any liquid level detection method is specified from the setup part 500, it is preferentially used.

If the liquid level detection method specified from the setup part 500 differs from an automatically selected liquid level detection method, the automatic analyzer may reference both a signal output from the capacitance detection unit 417 and a signal output from the pressure sensor 414 in order to judge whether the nozzle has reached the liquid surface. If, for instance, the leading end of the nozzle (probe) comes into contact with bubbles generated on the reagent liquid surface in a situation where the capacitance method is employed, the capacitance value may change when the reagent liquid surface is not reached. In such an instance, the pressure within the nozzle may also be detected to judge, if the pressure within the nozzle is not changed by more than a certain value, that the liquid level is erroneously detected. Subsequently, the nozzle may be further lowered to check for a change in the capacitance value. If any change occurs in the capacitance value, the liquid surface may be judged to be reached.

Further, the liquid level stabilization time may be automatically set depending on whether the reagent bottle includes the liquid level undulation prevention means. If any liquid level stabilization time setting is entered from the setup part 500, it may be preferentially used as the liquid level stabilization time.

Moreover, although Figs. 8 and 9 indicate only the capacitance method and the pressure detection method, a different method such as the optical detection method and the electrical resistivity method may be selected. As regards the liquid level stabilization time, a reagent dispensing operation may be halted for two or more reagent dispensing control cycles instead of one reagent dispensing control cycle.

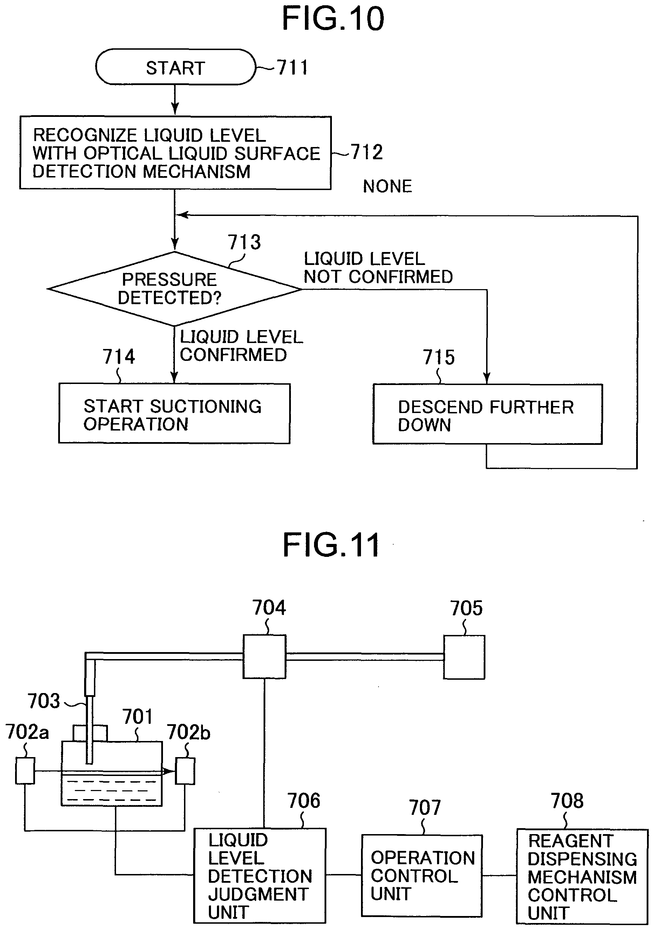

Fig. 10 is a flowchart illustrating the flow of reagent dispensing operation determination by the automatic analyzer according to a second embodiment of the present invention. Fig. 11 is a functional block diagram illustrating how the flow shown in Fig. 10 is executed.

The automatic analyzer according to the second embodiment includes liquid level detection means. In the second embodiment, neither the information derived from the setup screen of the automatic analyzer nor the information derived from the noncontact information medium attached to a reagent bottle is required as the information about the reagent bottle. Instead, the second embodiment forms a relevant judgment by using the liquid level detection means alone.

An operation starts in step 711. A reagent dispensing mechanism 703 descends to the liquid level in a reagent bottle 701. In step 712, optical liquid level detection means (702a/702b) of the automatic analyzer recognizes the liquid level, and notifies a liquid level judgment unit 706 that the liquid level is recognized. In the next step, step 713, a pressure detection mechanism 704 in a flow path of the reagent dispensing mechanism 703 runs a pressure check to judge whether the liquid level is actually reached, and reports the result of judgment to the liquid level judgment unit 706. Next, when the liquid level is judged to be reached, step 714 is performed to actually suction the reagent in the reagent bottle. In this instance, an operation control unit 707 controls a reagent dispensing nozzle drive unit 708 in accordance with a signal transmitted from the liquid level judgment unit 706.

When, on the other hand, the pressure detection mechanism 704 concludes in step 713 that the liquid surface is not reached, the reagent dispensing mechanism 703 further descends by a fixed amount in step 715. Step 713 is then performed again to check whether the liquid surface is reached. Next, the operation control unit 707 controls the reagent dispensing nozzle drive unit 708 in accordance with a signal transmitted from the liquid level judgment unit 706.

Figs. 10 and 11 depict the flow of judgment that is formed by a combination of the optical detection method and pressure detection method. Alternatively, however, a combination of the other methods such as the capacitance method and electrical resistivity method may be selected.

As described above, the embodiments of the present invention are configured to control a reagent dispensing operation by selecting an appropriate liquid level detection method and liquid level stabilization time in accordance with the type of an employed reagent bottle (the size of the reagent suction opening and the provision of the liquid level undulation prevention means). Therefore, it is possible to provide an automatic analyzer and automatic analysis method that measure out a reagent in a manner appropriate for an employed reagent vessel, obtain highly reliable analytical data, and offer high processing capabilities when the employed reagent vessel is suitable for chemical characteristics of the reagent.

The above-described examples deal with a case where the present invention is applied to an automatic analysis system having a plurality of analysis modules. However, the present invention can also be applied to an automatic analyzer.

An automatic analyzer to which the present invention is applied will now be described.

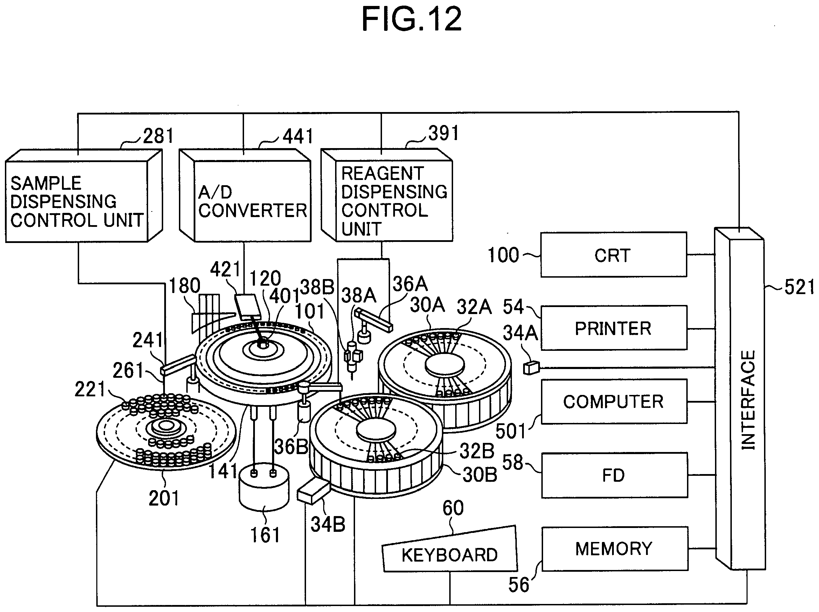

Fig. 12 is a diagram illustrating the overall configuration of the above-mentioned automatic analyzer. Referring to Fig. 12, a large number of reaction cuvettes 120 made of a translucent material are circumferentially disposed on an intermittently rotatable reaction disk 101. The reaction cuvettes 120 are maintained at a predetermined temperature (e.g., 37°C) by an incubation bath 141. The temperature of a fluid in the incubation bath 141 is adjusted by an incubation device 161.

A large number of sample vessels 221 are disposed on a sample disk 201. Blood, urine, or other biological sample is contained in each sample vessel 221. A pipette nozzle 261 which is mounted on a movable arm 241 suctions a predetermined amount of sample from a sample vessel 221 placed at a suction position on the sample disk 201, and discharges the suctioned sample into a reaction cuvette 120 placed at a discharge position on the reaction disk 101.

A plurality of reagent bottles 32A, 32B are disposed on reagent disks placed in reagent coolers 30A, 30B. Labels carrying a barcode or other reagent identification information are attached to the reagent bottles 32A, 32B. The reagent bottles 32A, 32B contain a reagent that is appropriate for the items to be examined by the automatic analyzer.

A barcode reader attached to each reagent cooler 30A, 30B reads a barcode printed on the outer wall of each reagent bottle at the time of reagent registration. Reagent information read in this manner is registered in a later-described memory 56 together with position information about a bottle on a reagent disk.

A reagent pipette nozzle in each reagent dispensing mechanism 36A, 36B suctions a reagent liquid from a reagent bottle for a specific examination, which is placed at a reagent reception position of the reaction disk 101, and discharges the suctioned reagent liquid into an associated reaction cuvette 120. A mixture of sample and reagent in the reaction cuvette 120 is stirred by stirring mechanisms 38A, 38B. A row of re4action cuvettes 120 is rotationally moved to pass a photometric measurement position between a white light source 401 and a multi-wavelength photometer 421.

The resulting reaction solution in each reaction cuvette 120 which is derived from the mixture of sample and reagent is photometrically measured while the reaction disk 101 rotates. An analog signal measured for each sample enters an A/D converter 441. A reaction cuvette washing mechanism 180, which is positioned near the reaction disk 101, washes the inside of a used reaction cuvette 120, thereby permitting repeated use of the reaction cuvette.

Next, a control system and a signal processing system in the automatic analyzer shown in Fig. 12 will be briefly described.

A computer 501 is connected to a sample dispensing control unit 281, a reagent dispensing control unit 391, and an A/D converter 441 through an interface 521. The computer 501 transmits a command to the sample dispensing control unit 281 to control a sample dispensing operation. Further, the computer 501 transmits a command to the reagent dispensing control unit 391 to control a reagent dispensing operation.

A photometric value which is converted to a digital signal by the A/D converter 441 enters the computer 501. The interface 521 is connected to: a printer 54 which is used for printing; a memory 56 and a flexible magnetic disk drive 58 which are storage devices; a keyboard 60 for entering operating commands and the like; and a CRT 100 which is used as a display device.

As a display device, a liquid-crystal display may be used in place of the CRT. The memory 56 may include, for instance, a hard disk memory or an external memory. The memory 56 stores various items of information such as passwords for operators, display levels on individual screens, analysis parameters, requested items to be examined, calibration results, and analysis results.

Next, a sample analysis operation by the automatic analyzer shown in Fig. 12 will be described. Analysis parameters concerning the items that can be examined by the automatic analyzer are input in advance from a keyboard 60 or other information input device and stored in the memory 56. An operator uses a later-described operating function screen to select the items to be examined that are requested for each sample. In this instance, a patient ID and other relevant information are also input from the keyboard 60. In order to analyze the items to be examined that are requested for each sample, the pipette nozzle 261 suctions a predetermined amount of sample from a sample vessel 221 and dispenses the suctioned sample into a reaction cuvette 120 in accordance with the analysis parameters.

After the sample is dispensed into the reaction cuvette, the reaction disk 101 rotates to move the reaction cuvette, and then places the reaction cuvette at a reagent reception position. In accordance with the analysis parameters concerning the associated items to be examined, the pipette nozzles of the reagent dispensing mechanisms 36A, 36B dispense a predetermined amount of reagent liquid into the reaction cuvette 120. The order of sample and reagent dispensing operations may be the reverse of the above example. More specifically, the reagent may be dispensed prior to the sample.

Subsequently, the stirring mechanisms 38A, 38B stir and mix the sample and reagent. When the reaction cuvette 120 passes a photometric measurement position, the multi-wavelength photometer 421 photometrically measures the absorbance of the reaction solution. The photometrically measured absorbance is input into the computer 501 through the A/D converter 441 and the interface 521. The absorbance is then converted to concentration data in accordance with a calibration curve that is measured in advance by an analysis method designated for each items to be examined. Constituent concentration data, which is obtained as a result of examinations of the items, is output to the printer 54 and the screen of the CRT 100.

Before the above measurement operation is performed, the operator uses an operating screen on the CRT 100 to set various parameters necessary for analytical measurements and register a sample. The operator also views the operating screen to confirm analysis results obtained from measurements.

The present invention can also be applied to the automatic analyzer shown in Fig. 12.

### Description of Reference Numerals

1... Sample rack introduction unit
2... ID reading unit
3... Rack transport line
4... Reexamination transport line
5 - ... Analysis module
9... Sample rack standby unit
10... Sample rack recovery unit
11... Overall management computer
12 to 17... Analysis module computer
18... Operating unit
19... Display unit
41... Reagent vessel
51, 61, 71, 81... Draw line
91... Buffer
414... Pressure sensor
417... Capacitance detection unit
418... Reagent disk drive unit
419... Liquid level judgment unit
420... Operation control unit
422... Reagent dispensing nozzle drive unit
423... Pump
451, 461... Nozzle (probe)

## Claims

1. An automatic analyzer having reagent suction/discharge means (45, 46) for inserting a nozzle (451) into the opening of a reagent vessel (41), suctioning a reagent from the reagent vessel (41), and discharging the suctioned reagent into a reaction cuvette (50), the automatic analyzer comprising:
reagent vessel information input means (500) for inputting the size of the opening of the reagent vessel (41);
a plurality of different types of liquid surface contact detection means (414, 417) for detecting the contact of the nozzle (451) to the liquid surface of the reagent in the reagent vessel (41); and
operation control means (420) for selecting one of the different types of liquid surface contact detection means (414, 417) in accordance with the size of the opening of the reagent vessel (41) as input from the reagent vessel information input means (500) and controlling a reagent suctioning operation of the reagent suction/discharge means (45, 46) in accordance with a liquid surface contact detection signal from the selected liquid surface contact detection means (414, 417).

2. The automatic analyzer according to claim 1, further comprising:
reagent vessel transport means (43, 44) for transporting the reagent vessel (41) to a reagent suction position at which the reagent suction/discharge means (45, 46) suctions a reagent,
wherein the reagent vessel information input means (500) inputs information indicating whether the reagent vessel (41) has liquid surface undulation prevention means (412), and
wherein the operation control means (420) changes reagent suctioning operation start time in accordance with information that indicates whether the reagent vessel (41) has the liquid surface undulation prevention means (412) and that is input from the reagent vessel information input means (500), the reagent suctioning operation start time being the time interval between the instant at which the reagent vessel transport means (43, 44) ends transport operation of the reagent vessel (41) to the reagent suction position and the instant at which the reagent suction/discharge means (45, 46) starts a reagent suctioning operation.

3. The automatic analyzer according to claim 2,
wherein the operation control means (420) ensures that the reagent suctioning operation start time is shorter when the reagent vessel (41) has the liquid surface undulation prevention means (412) than when the reagent vessel (41) does not have the liquid surface undulation prevention means (412).

4. The automatic analyzer according to claim 2,
wherein the plurality of different types of liquid surface contact detection means (414, 417) include capacitance-type liquid surface contact detection means (417) and pressure-detection-type liquid surface contact detection means (414), the capacitance type liquid surface contact detection means (417) detecting the value of capacitance between the nozzle (451) and the reagent vessel (41) and detecting in accordance with a change in the detected capacitance value that the nozzle (451) has reached the reagent liquid surface, the pressure detection type liquid surface contact detection means (414) detecting pressure within the nozzle (451) and detecting in accordance with a change in the detected pressure that the nozzle (451) has reached the reagent liquid surface, and
wherein the operation control means (420) controls the reagent suctioning operation of the reagent suction/discharge means (45, 46) in accordance with a liquid surface detection signal from the capacitance-type liquid surface contact detection means (417) when the reagent vessel (41) has a large opening, and controls the reagent suctioning operation of the reagent suction/discharge means (45, 46) in accordance with a liquid surface detection signal from the pressure-detection-type liquid surface contact detection means (414) when the reagent vessel (41) has a small opening.

5. An automatic analysis method for inserting a nozzle (451) into the opening of a reagent vessel (41), suctioning a reagent from the reagent vessel (41), discharging the suctioned reagent into a reaction cuvette (50) containing a sample, and analyzing the resulting mixed solution in the reaction cuvette (50), the automatic analysis method comprising the steps of:
inputting the size of the opening of the reagent vessel (41) to reagent vessel information input means (500);
selecting one of a plurality of different types of liquid surface detection means (414, 417) which detects that the nozzle (451) has reached the liquid surface of the reagent in the reagent vessel (41), in accordance with the size of the opening of the reagent vessel (41) as input from reagent vessel information input means (500); and
controlling a reagent suctioning operation of the nozzle (451) in accordance with a liquid surface detection signal from the selected liquid surface detection means (414, 417).

6. The automatic analysis method according to claim 5,
wherein the reagent vessel transport means (43, 44) transports the reagent vessel (41) to a reagent suction position at which the nozzle (451) suctions a reagent,
wherein the reagent vessel information input means (500) inputs information indicating whether the reagent vessel (41) has liquid surface undulation prevention means (412), and
wherein reagent suctioning operation start time is changed in accordance with information that indicates whether the reagent vessel (41) has the liquid surface undulation prevention means (412) and that is input from the reagent vessel information input means (500), the reagent suctioning operation start time being the time interval between the instant at which the reagent vessel transport means (43, 44) ends transport operation of the reagent vessel (41) to the reagent suction position and the instant at which nozzle (451) starts a reagent suctioning operation.

7. The automatic analysis method according to claim 6,
wherein the reagent suctioning operation start time is shorter when the reagent vessel (41) has the liquid surface undulation prevention means (412) than when the reagent vessel (41) does not have the liquid surface undulation prevention means (412).

8. The automatic analysis method according to claim 6,
wherein the plurality of different liquid surface contact detection means (414, 417) include capacitance-type liquid surface contact detection means (417) and pressure-detection-type liquid surface contact detection means (414), the capacitance-type liquid surface detection means (417) detecting the value of capacitance between the nozzle (451) and the reagent vessel (41) and detecting in accordance with a change in the detected capacitance value that the nozzle (451) has reached the reagent liquid surface, the pressure-detection-type liquid surface contact detection means (414) detecting pressure within the nozzle (451) and detecting in accordance with a change in the detected pressure that the nozzle (451) has reached the reagent liquid surface, and
wherein the reagent suctioning operation of the nozzle (451) is controlled in accordance with a liquid surface detection signal from the capacitance-type liquid surface contact detection means (417) when the reagent vessel (41) has a large opening, and controlled in accordance with a liquid surface detection signal from the pressure-detection-type liquid surface contact detection means (414) when the reagent vessel (41) has a small opening.

## Patentansprüche

1. Automatische Analysevorrichtung mit einer Reagenz-Saug-/Abgabeeinrichtung (45, 46) zum Einführen eines Stutzens (451) in die Öffnung eines Reagenzgefäßes (41), Saugen eines Reagenz aus dem Reagenzgefäß (41) und Abgeben des angesaugten Reagenz in eine Reaktionsküvette (50), wobei die automatische Analysevorrichtung umfasst:
eine Reagenzgefäß-Informationseingabeeinrichtung (500) zum Eingeben der Größe der Öffnung des Reagenzgefäßes (41);
mehrere verschiedene Arten von Flüssigkeitsoberflächen-Kontaktdetektionseinrichtungen (414, 417) zum Detektieren des Kontakts des Stutzens (451) mit der Flüssigkeitsoberfläche des Reagenz im Reagenzgefäß (41) und
eine Betriebssteuerungseinrichtung (420) zum Auswählen einer der verschiedenen Arten von Flüssigkeitsoberflächen-Kontaktdetektionseinrichtungen (414, 417) gemäß der Größe der Öffnung des Reagenzgefäßes (41), wie sie von der Reagenzgefäß-Informationseingabe-Einrichtung (500) eingegeben worden ist, und zum Steuern eines Reagenzansaugvorgangs der Reagenz-Saug-/Abgabeeinrichtung (45, 46) gemäß einem Flüssigkeitsoberflächen-Kontaktdetektionssignals von der ausgewählten Flüssigkeitsoberflächen-Kontaktdetektionseinrichtung (414, 417).

2. Automatische Analysevorrichtung nach Anspruch 1, ferner umfassend:
eine Reagenzgefäß-Transporteinrichtung (43, 44) zum Transportieren des Reagenzgefäßes (41) zu einer Reagenzansaugposition, an der die Reagenz-Saug-/Abgabeeinrichtung (45, 46) ein Reagenz ansaugt,
wobei die Reagenzgefäß-Informationseingabe-Einrichtung (500) Informationen eingibt, die angeben, ob das Reagenzgefäß (41) eine Einrichtung (412) zum Verhindern von Wellenbildung auf der Flüssigkeitsoberfläche aufweist, und
wobei die Betriebssteuerungseinrichtung (420) den Startzeitpunkt des Reagenzansaugvorgangs gemäß Informationen ändert, die angeben, ob das Reagenzgefäß (41) die Einrichtung (412) zum Verhindern von Wellenbildung auf der Flüssigkeitsoberfläche aufweist, und die von der Reagenzgefäß-Informationseingabe-Einrichtung (500) eingegeben worden sind, wobei der Startzeitpunkt des Reagenzansaugvorgangs das Zeitintervall zwischen dem Moment, zu dem die Reagenzgefäß-Transporteinrichtung (43, 44) den Transportvorgang des Reagenzgefäßes (41) zur Reagenzansaugposition beendet und dem Zeitpunkt, zu dem die Reagenz-Saug-/Abgabeeinrichtung (45, 46) mit einem Reagenzansaugvorgang beginnt, ist.

3. Automatische Analysevorrichtung nach Anspruch 2,
wobei die Betriebssteuerungseinrichtung (420) sicherstellt, dass der Startzeitpunkt des Reagenzansaugvorgangs kürzer ist, wenn das Reagenzgefäß (41) die Einrichtung (412) zur Verhinderung von Wellenbildung auf der Flüssigkeitsoberfläche aufweist, als wenn das Reagenzgefäß (41) die Einrichtung (412) zur Verhinderung von Wellenbildung auf der Flüssigkeitsoberfläche nicht aufweist.

4. Automatische Analysevorrichtung nach Anspruch 2,
wobei die mehreren von verschiedenen Arten von Flüssigkeitsoberflächen-Kontaktdetektionseinrichtungen (414, 417) eine Flüssigkeitsoberflächen-Kontaktdetektionseinrichtung (417) vom Kapazitätstyp und eine Flüssigkeitsoberflächen-Kontaktdetektionseinrichtung (414) vom Druckdetektionstyp enthalten, wobei die Flüssigkeitsoberflächen-Kontaktdetektionseinrichtung (417) vom Kapazitätstyp den Kapazitätswert zwischen dem Stutzen (451) und dem Reagenzgefäß (41) detektiert und gemäß einer Änderung im detektierten Kapazitätswert detektiert, dass der Stutzen (451) die Reagenzflüssigkeitsoberfläche erreicht hat, wobei die Flüssigkeitsoberflächen-Kontaktdetektionseinrichtung (414) vom Druckdetektionstyp Druck innerhalb des Stutzens (451) detektiert und gemäß einer Änderung im detektierten Druck detektiert, dass der Stutzen (451) die Reagenzflüssigkeitsoberfläche erreicht hat, und
wobei die Betriebssteuerungseinrichtung (420) den Reagenzansaugvorgang der Reagenz-Saug-/Abgabeeinrichtung (45, 46) gemäß einem Flüssigkeitsoberflächen-Detektionssignal von der Flüssigkeitsoberflächen-Kontaktdetektionseinrichtung (417) vom Kapazitätstyp steuert, wenn das Reagenzgefäß (41) eine große Öffnung aufweist, und den Reagenzansaugvorgang der Reagenz-Saug-/Abgabeeinrichtung (45, 46) gemäß einem Flüssigkeitsoberflächen-Detektionssignal von der Flüssigkeitsoberflächen-Kontaktdetektionseinrichtung (414) vom Druckdetektionstyp steuert, wenn das Reagenzgefäß (41) eine kleine Öffnung aufweist.

5. Automatisches Analyseverfahren zum Einführen eines Stutzens (451) in die Öffnung eines Reagenzgefäßes (41), Ansaugen eines Reagenz aus dem Reagenzgefäß (41), Abgeben des angesaugten Reagenz in eine Reaktionsküvette (50), die eine Probe enthält, und Analysieren der resultierenden gemischten Lösung in der Reaktionsküvette (50), wobei das automatische Analyseverfahren die folgenden Schritte umfasst:
Eingeben der Größe der Öffnung des Reagenzgefäßes (41) in eine Reagenzgefäß-Informationseingabe-Einrichtung (500);
Auswählen einer von mehreren verschiedenen Arten von Flüssigkeitsoberflächen-Detektionseinrichtungen (414, 417), die detektieren, das der Stutzen (451) die Flüssigkeitsoberfläche des Reagenz im Reagenzgefäß (41) erreicht hat, gemäß der Größe der Öffnung des Reagenzgefäß (41), wie sie von der Reagenzgefäß-Informationseingabe-Einrichtung (500) eingegeben worden ist; und
Steuern eines Reagenzansaugvorgangs des Stutzens (451) gemäß einem Flüssigkeitsoberflächen-Detektionssignal von der ausgewählten Flüssigkeitsoberflächen-Detektionseinrichtung (414, 417).

6. Automatisches Analyseverfahren nach Anspruch 5,
wobei die Reagenzgefäß-Transporteinrichtung (43, 44) das Reagenzgefäß (41) zu einer Reagenzansaugposition transportiert, an der der Stutzen (451) ein Reagenz ansaugt,
wobei die Reagenzgefäß-Informationseingabe-Einrichtung (500) Informationen eingibt, die angeben, ob das Reagenzgefäß (41) eine Einrichtung (412) zum Verhindern von Wellenbildung auf der Flüssigkeitsoberfläche aufweist, und
wobei ein Startzeitpunkt des Reagenzansaugvorgangs gemäß Informationen geändert wird, die angeben, ob das Reagenzgefäß (41) die Einrichtung (412) zum Verhindern von Wellenbildung auf der Flüssigkeitsoberfläche aufweist, und die von der Reagenzgefäß-Informationseingabe-Einrichtung (500) eingegeben worden sind, wobei der Startzeitpunkt des Reagenzansaugvorgangs das Zeitintervall zwischen dem Moment, zu dem die Reagenzgefäß-Transporteinrichtung (43, 44) den Transportvorgang des Reagenzgefäßes (41) zur Reagenzansaugposition beendet, und den Zeitpunkt, zu dem der Stutzen (451) einen Reagenzansaugvorgang beginnt, ist.

7. Automatisches Analyseverfahren nach Anspruch 6,
wobei der Startzeitpunkt des Reagenzansaugvorgangs kürzer ist, wenn das Reagenzgefäß (41) die Einrichtung (412) zum Verhindern von Wellenbildung auf der Flüssigkeitsoberfläche aufweist, als wenn das Reagenzgefäß (41) die Einrichtung (412) zum Verhindern von Wellenbildung auf der Flüssigkeitsoberfläche nicht aufweist.

8. Automatisches Analyseverfahren nach Anspruch 6,
wobei die mehreren der verschiedenen Flüssigkeitsoberflächen-Kontaktdetektionseinrichtungen (414, 417) eine Flüssigkeitsoberflächen-Kontaktdetektionseinrichtung (417) vom Kapazitätstyp und eine Flüssigkeitsoberflächen-Kontaktdetektionseinrichtung (414) vom Druckdetektionstyp enthalten, wobei die Flüssigkeitsoberflächen-Detektionseinrichtung (417) vom Kapazitätstyp den Kapazitätswert zwischen dem Stutzen (451) und dem Reagenzgefäß (41) detektiert und gemäß einer Änderung im detektierten Kapazitätswert detektiert, dass der Stutzen (451) die Reagenzflüssigkeitsoberfläche erreicht hat, wobei die Flüssigkeitsoberflächen-Kontaktdetektionseinrichtung (414) vom Druckdetektionstyp Druck innerhalb des Stutzens (451) detektiert und gemäß einer Änderung im detektierten Druck detektiert, dass der Stutzen (451) die Reagenzflüssigkeitsoberfläche erreicht hat, und
wobei der Reagenzansaugvorgang des Stutzens (451) gemäß einem Flüssigkeitsoberflächen-Detektionssignal von der Flüssigkeitsoberflächen-Kontaktdetektionseinrichtung (417) vom Kapazitätstyp gesteuert wird, wenn das Reagenzgefäß (41) eine große Öffnung aufweist, und gemäß einem Flüssigkeitsoberflächen-Detektionssignal von der Flüssigkeitsoberflächen-Kontaktdetektionseinrichtung (414) vom Druckdetektionstyp gesteuert wird, wenn das Reagenzgefäß (41) eine kleine Öffnung aufweist.

## Revendications

1. Analyseur automatique ayant un moyen (45, 46) d'aspiration/décharge de réactif pour insérer un embout (451) dans l'ouverture d'un récipient (41) de réactif, aspirer un réactif depuis le récipient (41) de réactif, et décharger le réactif aspiré dans une cuvette (50) de réaction, l'analyseur automatique comprenant :
un moyen (500) d'entrée d'informations de récipient de réactif pour entrer la taille de l'ouverture du récipient (41) de réactif ;
une pluralité de types différents de moyens (414, 417) de détection de contact de surface de liquide pour détecter le contact de l'embout (451) avec la surface de liquide du réactif dans le récipient (41) de réactif ; et
un moyen (420) de commande d'opération pour sélectionner un des types différents de moyens (414, 417) de détection de contact de surface de liquide en fonction de la taille de l'ouverture du récipient (41) de réactif telle qu'entrée depuis le moyen (500) d'entrée d'informations de récipient de réactif et commander une opération d'aspiration de réactif du moyen (45, 46) d'aspiration/décharge de réactif en fonction d'un signal de détection de contact de surface de liquide provenant du moyen (414, 417) de détection de contact de surface de liquide sélectionné.

2. Analyseur automatique selon la revendication 1, comprenant en outre :
un moyen (43, 44) de transport de récipient de réactif pour transporter le récipient (41) de réactif jusqu'à une position d'aspiration de réactif à laquelle le moyen (45, 46) d'aspiration/décharge de réactif aspire un réactif,
dans lequel le moyen (500) d'entrée d'informations de récipient de réactif entre une information indiquant si le récipient (41) de réactif a un moyen (412) de prévention d'ondulation de surface de liquide, et
dans lequel le moyen (420) de commande d'opération change un temps de début d'opération d'aspiration de réactif en fonction de l'information qui indique si le récipient (41) de réactif a le moyen (412) de prévention d'ondulation de surface de liquide et qui est entrée depuis le moyen (500) d'entrée d'informations de récipient de réactif, le temps de début d'opération d'aspiration de réactif étant l'intervalle de temps entre l'instant auquel le moyen (43, 44) de transport de récipient de réactif termine l'opération de transport du récipient (41) de réactif jusqu'à la position d'aspiration de réactif et l'instant auquel le moyen (45, 46) d'aspiration/décharge de réactif débute une opération d'aspiration de réactif.

3. Analyseur automatique selon la revendication 2,
dans lequel le moyen (420) de commande d'opération garantit que le temps de début d'opération d'aspiration de réactif est plus court lorsque le récipient (41) de réactif a le moyen (412) de prévention d'ondulation de surface de liquide que lorsque le récipient (41) de réactif n'a pas le moyen (412) de prévention d'ondulation de surface de liquide.

4. Analyseur automatique selon la revendication 2,
dans lequel la pluralité de types différents de moyens (414, 417) de détection de contact de surface de liquide inclut un moyen (417) de détection de contact de surface de liquide de type à capacitance et un moyen (414) de détection de contact de surface de liquide de type à détection de pression, le moyen (417) de détection de contact de surface de liquide de type à capacitance détectant la valeur de capacitance entre l'embout (451) et le récipient (41) de réactif et détectant en fonction d'un changement de la valeur de capacitance détectée que l'embout (451) a atteint la surface de liquide réactif, le moyen (414) de détection de contact de surface de liquide de type à détection de pression détectant une pression à l'intérieur de l'embout (451) et détectant en fonction d'un changement de la pression détectée que l'embout (451) a atteint la surface de liquide réactif, et
dans lequel le moyen (420) de commande d'opération commande l'opération d'aspiration de réactif du moyen (45, 46) d'aspiration/décharge de réactif en fonction d'un signal de détection de surface de liquide provenant du moyen (417) de détection de contact de surface de liquide de type à capacitance lorsque le récipient (41) de réactif a une grande ouverture, et commande l'opération d'aspiration de réactif du moyen (45, 46) d'aspiration/décharge de réactif en fonction d'un signal de détection de surface de liquide provenant du moyen (414) de détection de contact de surface de liquide de type à détection de pression lorsque le récipient (41) de réactif a une petite ouverture.

5. Procédé d'analyse automatique pour insérer un embout (451) dans l'ouverture d'un récipient (41) de réactif, aspirer un réactif depuis le récipient (41) de réactif, décharger le réactif aspiré dans une cuvette (50) de réaction contenant un échantillon, et analyser la solution mixte résultante dans la cuvette (50) de réaction, le procédé d'analyse automatique comprenant les étapes de :
entrée de la taille de l'ouverture du récipient (41) de réactif dans un moyen (500) d'entrée d'informations de récipient de réactif ;
sélection d'un d'une pluralité de types différents de moyens (414, 417) de détection de contact de surface de liquide qui détecte que l'embout (451) a atteint la surface de liquide du réactif dans le récipient (41) de réactif, en fonction de la taille de l'ouverture du récipient (41) de réactif telle qu'entrée depuis le moyen (500) d'entrée d'informations de récipient de réactif ; et
commande d'une opération d'aspiration de réactif de l'embout (451) en fonction d'un signal de détection de contact de surface de liquide provenant du moyen (414, 417) de détection de contact de surface de liquide sélectionné.

6. Procédé d'analyse automatique selon la revendication 5,
dans lequel le moyen (43, 44) de transport de récipient de réactif transporte le récipient (41) de réactif jusqu'à une position d'aspiration de réactif à laquelle l'embout (451) aspire un réactif,
dans lequel le moyen (500) d'entrée d'informations de récipient de réactif entre une information indiquant si le récipient (41) de réactif a un moyen (412) de prévention d'ondulation de surface de liquide, et
dans lequel un temps de début d'opération d'aspiration de réactif est changé en fonction de l'information qui indique si le récipient (41) de réactif a le moyen (412) de prévention d'ondulation de surface de liquide et qui est entrée depuis le moyen (500) d'entrée d'informations de récipient de réactif, le temps de début d'opération d'aspiration de réactif étant l'intervalle de temps entre l'instant auquel le moyen (43, 44) de transport de récipient de réactif termine l'opération de transport du récipient (41) de réactif jusqu'à la position d'aspiration de réactif et l'instant auquel l'embout (451) débute une opération d'aspiration de réactif.

7. Procédé d'analyse automatique selon la revendication 6,
dans lequel le temps de début d'opération d'aspiration de réactif est plus court lorsque le récipient (41) de réactif a le moyen (412) de prévention d'ondulation de surface de liquide que lorsque le récipient (41) de réactif n'a pas le moyen (412) de prévention d'ondulation de surface de liquide.

8. Procédé d'analyse automatique selon la revendication 6,
dans lequel la pluralité de types différents de moyens (414, 417) de détection de contact de surface de liquide inclut un moyen (417) de détection de contact de surface de liquide de type à capacitance et un moyen (414) de détection de contact de surface de liquide de type à détection de pression, le moyen (417) de détection de contact de surface de liquide de type à capacitance détectant la valeur de capacitance entre l'embout (451) et le récipient (41) de réactif et détectant en fonction d'un changement de la valeur de capacitance détectée que l'embout (451) a atteint la surface de liquide réactif, le moyen (414) de détection de contact de surface de liquide de type à détection de pression détectant une pression à l'intérieur de l'embout (451) et détectant en fonction d'un changement de la pression détectée que l'embout (451) a atteint la surface de liquide réactif, et
dans lequel l'opération d'aspiration de réactif de l'embout (451) est commandée en fonction d'un signal de détection de surface de liquide provenant du moyen (417) de détection de contact de surface de liquide de type à capacitance lorsque le récipient (41) de réactif a une grande ouverture, et commandée en fonction d'un signal de détection de surface de liquide provenant du moyen (414) de détection de contact de surface de liquide de type à détection de pression lorsque le récipient (41) de réactif a une petite ouverture.
